**Europäisches Patentamt**

**European Patent Office**

**Office européen des brevets**

(19)

(11) Veröffentlichungsnummer : **0 021 126**
**B1**

(12) # EUROPÄISCHE PATENTSCHRIFT

(45) Veröffentlichungstag der Patentschrift :
22.06.83

(21) Anmeldenummer : **80103040.4**

(22) Anmeldetag : **31.05.80**

(51) Int. Cl.³ : **F 16 H 15/40**, F 16 H 13/14

(54) **Vorrichtung zur dauernden Erzeugung der nötigen Anpressdrücke an einem stufenlos regulierbaren Getriebe mit Übertragung der Leistung durch Haftreibung.**

(30) Priorität : 07.06.79 CH 5295/79

(43) Veröffentlichungstag der Anmeldung :
07.01.81 Patentblatt 81/01

(45) Bekanntmachung des Hinweises auf die Patenterteilung : 22.06.83 Patentblatt 83/25

(84) Benannte Vertragsstaaten :
**BE DE FR GB IT NL SE**

(56) Entgegenhaltungen :
**DE C 164 362**
**FR A 846 867**
**FR A 1 372 950**
**US A 2 216 191**
**US A 3 800 606**

(73) Patentinhaber : **Grewe, Bernd**
**Goldbühlstrasse 6**
**CH-8620 Wetzikon (CH)**
**Streiff-von Orelli, Fritz**
**CH-8607 Aathal (CH)**

(72) Erfinder : **Grewe, Bernd**
**Goldbühlstrasse 6**
**CH-8620 Wetzikon (CH)**

(74) Vertreter : **Blum, Rudolf Emil Ernst et al**
**c/o E. BLUM & CO. Vorderberg 11**
**CH-8044 Zürich (CH)**

## Vorrichtung zur dauernden Erzeugung der nötigen Anpressdrücke an einem stufenlos regulierbaren Getriebe mit Übertragung der Leistung durch Haftreibung

Die Erfindung bezieht sich auf eine Vorrichtung zur dauernden Erzeugung der nötigen Anpressdrücke an einem stufenlos regulierbaren Getriebe, bestehend aus einer mit der Antriebswelle drehfest verbundenen Antriebsscheibe und einer oder mehreren getriebenen zur Antriebsscheibe parallelen, ebenfalls mit einer Welle drehfest verbundenen getriebenen Scheiben und einem oder mehreren Rollkörpern, die zwischen Antriebs- und getriebenen Scheiben eingeklemmt sind, damit sie die zu übertragende Leistung durch Haftreibung zwischen Scheiben und Rollkörpern übertragen können.

Stufenlos regulierbare Getriebe der beschriebenen Art sind z. B. aus der französischen Patentschrift 846 867 bekannt, weisen aber verschiedene Nachteile auf :

Bei zwangsweiser Verschiebung der Rollkörper zwecks Drehzahländerungen ergibt sich ein untragbarer Materialverschleiss, sofern nicht die Anpressdrücke so reduziert werden, dass die Fähigkeit zur Leistungsübertragung stark abnimmt. Durch einen besonderen Lenkmechanismus gelingt bei Kugeln die Ausschaltung dieses Nachteiles. Ein anderer Nachteil bisheriger Ausführungen, der nicht behoben ist, besteht darin, dass bei Leistungsänderung die Aenderung der Anpressdrücke durch entsprechende Anpassung der axial wirkenden äusseren Kräfte auf die Antriebsscheibe bzw. die Rollkörper nicht koordiniert ist. Ebenso fehlt eine der Stellung der Kugeln entsprechende Anpassung der Anpressdrücke, wodurch die Uebertragungsfähigkeit bei kleineren Abtriebsdrehzahlen stark abnimmt.

Aus der DE-C-164 362 ist bereits eine Vorrichtung zur dauernden Erzeugung von lastabhängigen Anpressdrücken an einem Reibungsgetriebe für Motorwagen mit Reibrad und Reibscheibe bekannt, bei welchem sich der Anpressdruck zwischen Reibrad und Reibscheibe entsprechend dem Fahrwiderstand ändert, wobei die das Reibrad tragende Welle als Hebel ausgebildet ist, an der eine Antriebskette angreift. Aus dieser Druckschrift ist somit an sich bekannt, die lastabhängige Haftreibung der Uebertragungselemente eines Reibungsgetriebes dadurch zu gewährleisten, dass eine dem Drehmoment proportionale Kraft über eine Hebelanordnung auf ein schwenkbar angeordnetes Uebertragungsorgan einwirkt.

Der Anpressdruck ist zwangsläufig stellungsabhängig. Bei der bekannten Vorrichtung wurde aber nicht darauf geachtet, dass bei Verstellung zwecks Drehzahlveränderung der Anpressungsdruck die in Abhängigkeit der Stellung notwendigen, unterschiedlichen Anpressdrücke erzeugt werden.

Die Erfindung bezweckt die Behebung der Nachteile dadurch, dass das der jeweiligen Leistung des Antriebsaggregates entsprechende Drehmoment über ein Zwischenelement eine dem Drehmoment proportionale Kraft erzeugt, welche über eine Hebelarmanordnung auf die schwenkbar angeordnete Antriebsscheibe und hierdurch auf den Rollkörper und die getriebene Scheibe wirkt, was die lastabhängige Haftreibung der Uebertragungselemente jederzeit gewährleistet, und dass die genannte Hebelarmanordnung so gewählt ist, dass die lastabhängige Kraft im Zusammenwirken mit dem Hebelarm, gebildet aus der Distanz zwischen dem Schwenkzentrum der Antriebsscheibe und dem Rollkörperberührungspunkt, für die verschiedenen Abtriebsdrehzahlen, also im Verschiebungsbereich des Uebertragungsrollkörpers, den der Rollkörperstellung entsprechenden stellungsabhängigen Druck auf den Rollkörper erzeugt, der zur Gewährleistung der Haftreibung erforderlich ist. Damit wird die dauernde Anpassung der Anpressdrücke bei veränderter Leistung lastabhängig geregelt und gleichzeitig bei Aenderung der Abtriebsdrehzahlen die notwendigen Aenderungen der Anpressdrücke auf den oder die Rollkörper stellungsabhängig so bewirkt, dass eine über den ganzen Drehbereich optimale Leistungsübertragung gewährleistet ist. Dies wird durch systematische Anwendung von Hebelgesetzen erreicht, indem die nötigen Anpressdrücke zur Erzielung der Haftreibung durch richtige Abstimmung der Hebelarme und Rollradien zueinander bewirkt wird. Hierdurch werden sowohl lastals auch drehzahlabhängige Anpressdrücke erzielt.

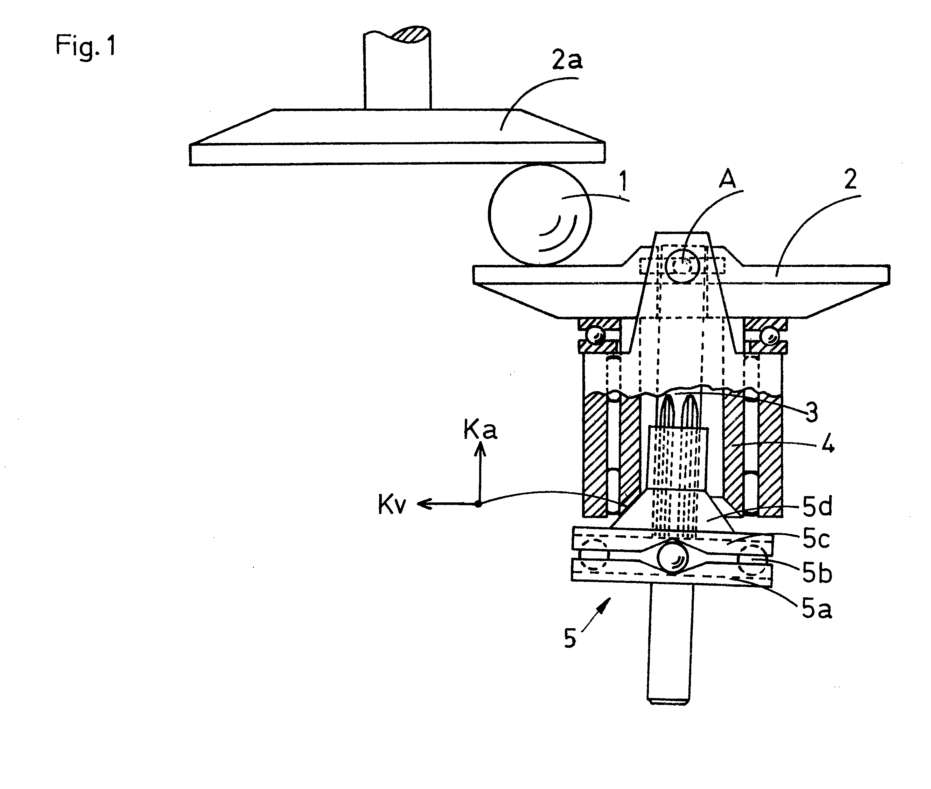

Die Erfindung wird nachfolgend anhand der Figuren 1 bis 3, welche drei verschiedene Ausführungsbeispiele zeigen, näher erläutert.

Fig. 1 zeigt schematisch eine Ausführung mit um Punkt A (Schnittpunkt der Scheibenebene mit der Antriebswellenachse) leicht schwenkbarer Antriebsscheibe 2. Die Scheibe ist fest verbunden mit dem Rohr 4, dessen Achse gegenüber der Wellenachse 3 einen kleinen Winkel aufweist. Hierdurch entsteht am unteren Punkt des Rohres eine einseitige Berührung mit dem Konus 5d eines ein Zwischenelement bildenden Spreizelementes 5, dessen unterer Teil 5a fest auf der Welle 3 sitzt, während der obere Teil 5c und 5d durch Kugeln 5b axial verschiebbar ist. Bei Leistungsübertragung von der Antriebswelle 3 auf die Antriebsscheibe 2 wird der obere Teil des Spreizelementes nach oben gedrückt, so dass der Konus des Spreizelementes eine Kraft Ka auf das Rohr ausübt. Da diese Kraft einseitig drückt, ergibt sich eine Kraftkomponente Kv, die über den Hebelarm Druckpunkt-Schwenkpunkt A auf die Antriebsscheibe bzw. die Kugel 1 wirkt. Da das Spreizelement entsprechend dem zu übertragenden Drehmoment mehr oder weniger angehoben wird, kann durch richtige Wahl der Winkel des Spreizelementes die jederzeit lastabhängige Anpassung der Kraftkomponente Kv zur Erreichung des notwendigen Anpressdruckes bewirkt werden. Gleichzeitig ermöglicht die Kraftübertragung durch Hebelwirkung, dass bei gleichbleibender Kraft Kv die Kugel 1 je nach Abtriebsdrehzahl, d. h. Stellung, einem dem Hebelarm Kugelzentrum-Mittelpunkt der Antriebsscheibe veränderten Druck ausgesetzt wird, wodurch die Uebertragungsfähigkeit weitgehend stellungsunabhängig gehalten werden kann.

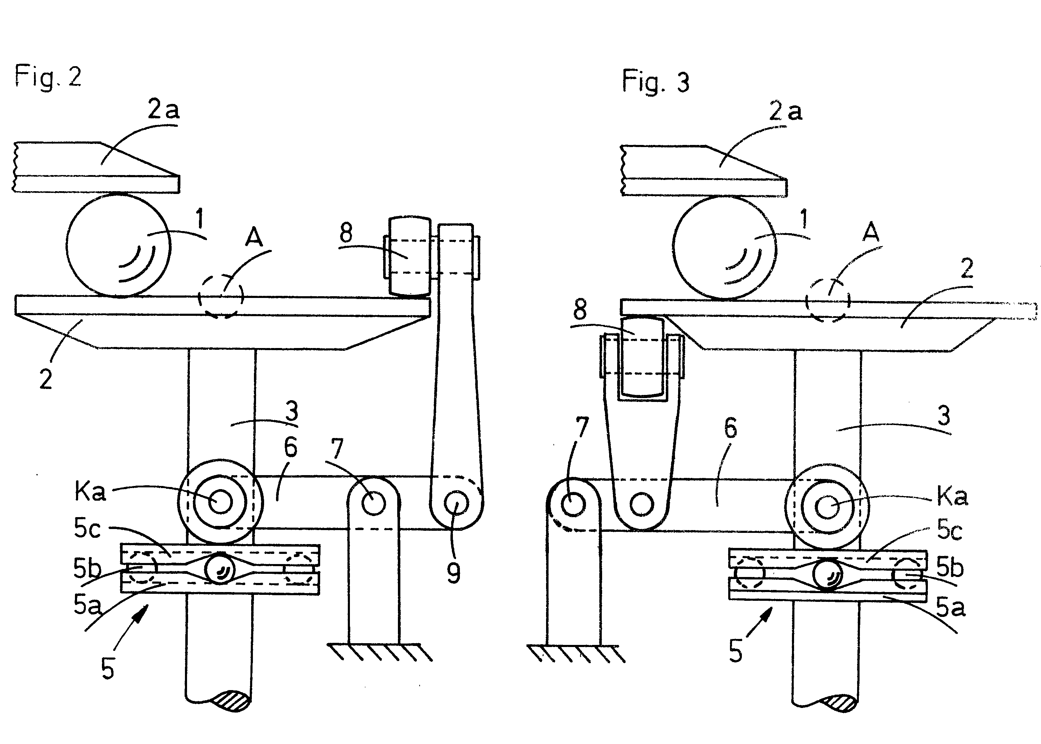

In Fig. 2 und 3 werden zwei andere Ausführungsmöglichkeiten dargestellt. In beiden Fällen sind die Antriebsscheiben 2 verschwenkbar auf den Antriebswellen 3 aufgesetzt. Das Spreizelement 5 hat die in Fig. 1 beschriebene Funktion. Durch die Drehmomente, welche von der Welle 3 auf den unteren Teil des Spreizelementes wirken, wird der obere Teil 5c mehr oder weniger angehoben, wodurch dieser auf einen Hebelarm 6 wirkt. Die durch das Spreizelement erzeugte axiale Kraft Ka kann mit beliebig wählbaren Uebersetzungen über einen Fixpunkt 7 auf die Antriebsscheibe 2 übertragen werden. Zur Uebertragung auf die Antriebsscheibe wird eine Kurvenrolle 8 verwendet. Hierdurch ist wiederum die lastabhängige Veränderung der Anpressdrücke gewährleistet. Der stellungsabhängige Anpressdruck auf die Kugel wird in gleicher Weise erzielt, wie bereits beschrieben.

Es sind weitere Ausführungen möglich, insbesondere durch Wirkung der vom Spreizelement seitlich auf die Antriebswelle erzeugten Kraft, sofern die Welle um ein Zentrum schwenkbar, oder wenn die Welle flexibel ist, wobei in diesen Fällen die Antriebsscheiben mit den Wellen stark verbunden sind, so dass die Uebertragung der Anpressdrücke auf die Kugeln über die Hebelarme Spreizelement-Schwenkzentrum, bzw. Kugelzentrum-Scheibenzentrum erfolgt.

Das Spreizelement 5 kann durch jede andere geeignete Anordnung ersetzt werden, mit welcher eine lastabhängige äussere Kraft erzeugt werden kann, die dann auf die Antriebsscheibe 2 übertragen wird, um die lastabhängige Haftreibung der Uebertragungselemente zu gewährleisten.

## Ansprüche

1. Vorrichtung zur dauernden Erzeugung der nötigen Anpressdrücke an einem stufenlos regulierbaren Getriebe, bestehend aus einer mit der Antriebswelle (3) drehfest verbundenen Antriebsscheibe (2) und einer oder mehreren getriebenen zur Antriebsscheibe parallelen, ebenfalls mit einer Welle drehfest verbundenen getriebenen Scheiben (2a) und einem oder mehreren Rollkörpern (1), die zwischen Antriebs- und getriebenen Scheiben eingeklemmt sind, damit sie die zu übertragende Leistung durch Haftreibung zwischen Scheiben und Rollkörpern übertragen können, dadurch gekennzeichnet, dass das der jeweiligen Leistung des Antriebsaggregates entsprechende Drehmoment über ein Zwischenelement (5) eine dem Drehmoment proportionale Kraft erzeugt, welche über eine Hebelarmanordnung auf die schwenkbar angeordnete Antriebsscheibe und hierdurch auf den Rollkörper und die getriebene Scheibe wirkt, was die lastabhängige Haftreibung der Uebertragungselemente jederzeit gewährleistet, und dass die genannte Hebelarmanordnung so gewählt ist, dass die lastabhängige Kraft im Zusammenwirken mit dem Hebelarm, gebildet aus der Distanz zwischen dem Schwenkzentrum (A) der Antriebsscheibe (2) und dem Rollkörperberührungspunkt, für die verschiedenen Abtriebsdrehzahlen, also im Verschiebungsbereich des Uebertragungsrollkörpers (1), den der Rollkörperstellung entsprechenden stellungsabhängigen Druck auf den Rollkörper erzeugt, der zur Gewährleistung der Haftreibung erforderlich ist.

2. Vorrichtung nach Anspruch 1, dadurch gekennzeichnet, dass die mit der Antriebsscheibe (2) drehfeste Antriebswelle (3) um den Schnittpunkt (A) der Scheibenebene mit der Wellenachse als Schwenkzentrum leicht verschwenkbar gelagert ist, und dass an der Welle in einer beliebigen Distanz vom Schwenkzentrum ein Spreizelement (5) eingebaut ist, welches durch ändernde Last auf der Antriebswelle (3) axial verschoben wird, was zur Erzeugung einer seitlich auf die Welle wirkenden äusseren Kraft führt, wobei die senkrecht zur Welle wirkende Kraftkomponente über die zwei Hebelarme, gebildet aus den Abständen Spreizelement-Schwenkzentrum der Welle, und Mittelpunkt der Antriebsscheibe-Rollkörperberührungspunkt den Anpressdruck last- und stellungsabhängig bestimmt.

3. Vorrichtung nach Anspruch 2, dadurch gekennzeichnet, dass die Antriebsscheibe (2) um ihr Zentrum (A) auf der Antriebswelle (3) schwenkbar angeordnet ist, so dass eine ausserhalb ihres Zentrums auf die Scheibe (2) wirkende äussere Kraft über den Hebelarm, gebildet aus dem Abstand Scheibenzentrum-Angriffspunkt der Kraft die Scheibe (2) und damit den Rollkörper (1) belastet, wobei die axiale Lage eines Spreizelementes (5) auf der Antriebswelle (3) die jeweilige lastabhängige Grösse der äusseren Kraft bestimmt, während bei Aenderung der Antriebsdrehzahlen durch Aenderung der Stellung der Uebertragungsrollkörper durch die Hebelwirkung des Abstandes Rollkörperberührungspunkt-Mittelpunkt der Scheibe der Anpressdruck laufend stellungsabhängig verändert wird (Fig. 1).

4. Vorrichtung nach Anspruch 2, dadurch gekennzeichnet, dass auf der um ihr Zentrum (A) auf der Wellenachse (3) schwenkbar angeordneten Antriebsscheibe (2) ein gegenüber der Wellenachse in einem kleinen Winkel zu dieser fest befestigtes Rohr (4) angebracht ist, das mit der Scheibe (2) rotiert, mit dem unteren offenen Ende ein Spreizelement (5) berührt, welches bei lastabhängiger Verschiebung in axialer Richtung einseitig auf das Rohr (4) drückt, wodurch dieses mit der fest verbundenen Antriebsscheibe (2) über den Hebelarm gebildet aus dem Abstand Anpresspunkt des Spreizelementes-Zentrum (A) der Scheibe (2) auf den Rollkörper (1) einen lastabhängigen Anpressdruck ausübt, der bei Aenderung der Lage des Rollkörpers (1) durch die Wirkung des Hebelarmes Rollkörperberührungspunkt-Mittelpunkt (A) der Scheibe (2) stellungsabhängig verändert wird (Fig. 1).

## Claims

1. Device for a continuous generation of the requisite pressure forces in an infinitely variable gear, consisting of a driving disk (2) mounted on a driving shaft for positive rotation therewith, and of one or several driven disks (2a) extending parallel to the driving disk and also mounted to a shaft for positive rotation therewith, and of one or several rolling bodies (1) which are clamped between driving and driven disks, such that the power to be transmitted is transmitted due to friction between disks and rolling bodies, characterized in that the torsional moment corresponding to the respective power of the driving means generates via an intermediate element (5) a force, which is proportional to the torsional moment, which force acts via a lever arm means onto the pivotably arranged driving disk and therewith onto the rolling body and the driven disk, which secures at any time a force-independent friction between the transmitting elements, and in that said lever arm means is chosen such that the load dependent force generates in cooperation with the lever arm defined by the distance between pivot centre (A) of the driving disk (2) and the point of contact of the rolling body, for the various drive speeds, that is within the range of displacement of the transmitting rolling body, the location dependent pressure corresponding to the location of the rolling body which is necessary for securing the friction.

2. The device of claim 1, characterized in that the driving shaft (3), which is mounted to the driving disk (2) for positive rotation therewith, is supported to pivot slightly around the pivot centre defined by the point (A) of intersection of the disk plane with the shaft axis, and in that a spreader element (5) is mounted at the shaft at an arbitrary distance from the pivot centre which element (5) is displaced axially by the changing load on the driving shaft (3), which leads to the generation of an outer force acting laterally onto the shaft, whereby the force component acting perpendicularly relative the shaft determines via the two lever arms defined by the distances spreading element-pivot centre of the shaft and centre of driving disk-point of contact of rolling body, the pressure force dependent from load and position.

3. The device of claim 2, characterized in that the driving disk (2) is pivotably mounted on the driving shaft (3) to pivot around its pivot centre (A), such that a force acting onto the disk (2) outside of its centre exerts a load via the lever arm defined by the distance centre of disk-point of attack of force onto the disk (2) and accordingly the rolling body (1), whereby the axial position of a spreader element (5) on the driving disk (3) determines the respective load dependent measure of the outer force, and whereby upon a change of the drive speeds the pressure force is continuously changed depending from the location by a change of the position of the transmitting rolling bodies by the lever action of the distance contact point of rolling body-centre point of disk.

4. The device of claim 2, characterized in that a tube (4) is fixedly mounted to the drive disk (2) located to pivot around its centre (A) on the axis of the shaft (3), which tube (4) is slanted by a small angle to the axis of the shaft and rotates with the shaft (2), contacts with its lower, open end a spreader element (5), which upon a load dependent transition in axial direction presses unilaterally onto the tube (4), whereupon this tube (4) together with the driving disk (2) mounted rigidly thereto exerts via the lever arm, defined by the distance point of pressure exertion of the spreader element-centre (A) of disk (2), a load dependent pressure force onto the rolling body (1), which upon a change of the position of the rolling body, due to the action of the lever arm point of contact of the rolling body-centre (A) of disk (2), is changed in a location-dependent manner.

## Revendications

1. Dispositif assurant en permanence la production des pressions de serrage nécessaires dans un mécanisme de transmission à réglage continu qui se compose d'un disque menant (2), solidaire à la rotation d'un arbre menant (3), d'un ou de plusieurs disques menés (2a), parallèles au disque menant et également solidaires à la rotation d'un arbre, et d'un ou de plusieurs corps roulants (1) qui sont coincés par serrage entre disques menant et mené, de manière à pouvoir transmettre, par frottement par adhérence entre disques et corps roulants, la puissance qui doit être transmise par le mécanisme, caractérisé en ce que le couple de rotation correspondant à la puissance instantanée du groupe moteur produit, au moyen d'un élément intermédiaire (5), une force proportionnelle au couple de rotation qui agit, au moyen d'un système de bras de levier, sur le disque menant qui est monté pivotant et, par suite, sur le corps roulant et sur le disque mené, ce qui assure à tout moment le frottement par adhérence des éléments de transmission en fonction de la charge, et en ce que ledit système de bras de levier est choisi de telle manière qu'en combinaison avec le bras de levier constitué par la distance entre le centre de pivotement (A) du disque menant (2) et le point de contact du corps roulant, la force dépendant de la charge produise sur le corps roulant, pour les différentes vitesses de sortie, c'est-à-dire dans la plage de déplacement du corps roulant de transmission (1), la pression dépendant de la position qui correspond à la position du corps roulant, pression qui est nécessaire pour garantir le frottement par adhérence.

2. Dispositif selon la revendication 1, caractérisé en ce que l'arbre menant (3) solidaire à la rotation du disque menant (2) est monté de manière à pouvoir pivoter facilement autour du point d'intersection (A) du plan du disque avec l'axe de l'arbre en tant que centre de pivotement, et en ce qu'il est monté sur l'arbre, à une distance quelconque du centre de pivotement, un élément extensible (5) qui est déplacé axialement par la charge variable sur l'arbre menant (3), ce qui se traduit par la production d'une force extérieure agissant latéralement sur l'arbre, la composante de cette force qui agit perpendiculairement à l'arbre déterminant la pression de serrage, en fonction de la charge et de la position, au moyen des deux bras de levier constitués par les distances élément extensible-centre de pivotement de l'arbre et centre du disque menant-point de contact du corps roulant.

3. Dispositif selon la revendication 2, caractérisé en ce que le disque menant (2) est monté pivotant sur l'arbre menant (3) autour de son centre (A), de telle manière qu'une force extérieure, agissant sur le disque (2) en dehors de son centre, charge le disque (2) et, par suite, le corps roulant (1) au moyen du bras de levier constitué par la distance centre du disque-point d'application de la force, la position axiale d'un élément extensible (5) sur l'arbre menant (3) déterminant la grandeur de la force extérieure en fonction de la charge instantanée, tandis qu'en cas de modification de la vitesse de sortie par modification de la position des corps roulants de transmission, la pression de serrage est modifiée de façon continue en fonction de cette position, par l'effet de levier de la distance point de contact des corps roulants-centre du disque (fig. 1).

4. Dispositif selon la revendication 2, caractérisé en ce qu'il est placé, sur le disque menant (2) qui est monté pivotant autour de son centre (A) sur l'axe de l'arbre (3), un tube (4) fixé rigidement à l'arbre et formant un petit angle avec l'axe de celui-ci, tube qui tourne avec le disque (2) et est en contact par son extrémité inférieure ouverte avec un élément extensible (5) qui, en cas de déplacement axial en fonction de la charge, exerce une pression unilatérale sur le tube (4), d'où il résulte que ce dernier exerce sur le corps roulant (1), par le disque menant (2) auquel il est fixé rigidement et au moyen du bras de levier constitué par la distance point de pression sur l'élément extensible-centre (A) du disque (2), une pression de serrage dépendant de la charge, pression qui, en cas de modification de la position du corps roulant (1), est modifiée en fonction de la position sous l'action du bras de levier point de contact du corps roulant-centre (A) du disque (2) (fig. 1).

Fig. 1

2a

1

A

2

3

4

5d

5c

5b

5a

5

Ka

Kv

0 021 126

1

Fig. 2

Fig. 3